# EUROPEAN PATENT APPLICATION

(11) **EP 2 993 536 A1**
(43) Date of publication of application: **09.03.2016**
(21) Application number: 14425111.3
(22) Date of filing: 02.09.2014
(51) Int. Cl.: G05B 9/02, G05B 19/05, H01R 3/00

(54) **Interconnection of an industrial plant security System for user access control**

(71) Applicant: Omron Europe B.V., 10046 Poirino (Torino) (IT)
(72) Inventor: Cambursano, Maurizio, 10034 Chivasso (Torino) (IT); Viviani, Paolo, 10029 Villastellone (Torino) (IT); Dijkhoff, Arno, 5467NJ Veghel (NL)
(74) Representative: Quinterno, Giuseppe

(57) **Abstract**

Safety system for user access control comprising a plurality of safety modules (2, 4, 6) interconnected by means of connecting elements (8), characterized in that the connecting elements (8) comprise a single wire, designed to transmit a signal between pairs of interconnected safety modules (2, 4, 6), provided with at least one connector (8a) at one of its ends.

## Description

The present invention relates to a safety system for industrial installations.

More specifically, the present invention relates to a safety system placed on or near mechanical equipment and comprising electronic safety modules (or units) designed to manage and control users' access to hazardous parts or areas of the equipment.

There is a known class of electronic safety modules designed to meet the requirement of protecting persons in areas where there is a need to ensure the safety of an operator using machinery, a robot, or, more generally, any hazardous automation system. These safety modules are also used to protect a hazardous area which might be accessed in a random and undesired way by non-qualified persons, or when it is necessary to monitor access to individual hazardous parts of machinery.

Safety modules are designed to acquire, on a continuous basis, alarm signals representative of an approach to equipment (or to parts thereof), and are capable of reacting, by means of internal tests, to any error or fault occurring in the electronic circuits and in the input circuitry.

Safety modules are known in themselves and may be classed in three different categories.

The first category comprises master modules (denoted below as AD modules) designed to receive at their inputs at least one alarm signal from at least one sensor of a known type associated with the equipment or with the area to be protected (for example, a magnetic sensor positioned on the access door to the room containing the equipment to be monitored), and to send from their outputs at least one output signal directed towards the machinery itself (or to a part thereof, such as a motor) in order to control and/or interrupt its operation.

Said alarm signal is a signal representative of a potentially hazardous event (such as the opening of the access door to the room containing the equipment to be monitored).

The second category comprises input expansion modules (denoted BC modules in the following text) which can operate independently or can be associated with an AD module.

When they operate independently, their inputs are connected directly to the sensor from which they acquire the alarm signal, and their outputs are connected to the machinery to be controlled.

When they are connected to an AD module, they are designed to supply the AD module with additional alarm signals (relating, for example, to other sensors associated with the equipment to be monitored). This is because an AD module is designed to acquire signals from a maximum of two sensors, and therefore the BC modules make it possible to expand the range of sensors that can be monitored and managed by an AD module, since each BC module is, in turn, capable of controlling two sensors.

Finally, the third category comprises output expansion modules (denoted EX modules in the following text), which can operate only if associated with an AD module, and which are designed to generate additional output signals.

Each AD module has two relay outputs, while each EX module has three relay outputs. Therefore the EX modules can be used to expand the outputs of an AD module, since each output of an EX module can be associated with a different part or motor of the equipment to be controlled. On the basis of a synchronization signal from the AD module, each EX module can switch the device or motor associated with it on or off.

When a plurality of AD, BC and EX modules are connected to one another, a synchronization signal is generated when the system is started, and is sent to the next module in the sequence, which in turn regenerates and modifies it in a known way before sending it, in turn, to the next module.

When the modules of the safety system are switched on, the AD module detects the presence of the EX and BC modules connected to it, and sends known synchronization messages. When the synchronization step is terminated correctly, the modules activate their outputs and the system starts to monitor the safety inputs (the aforesaid sensors). During the initial synchronization step, and while waiting for its completion, the outputs of the modules are kept switched off.

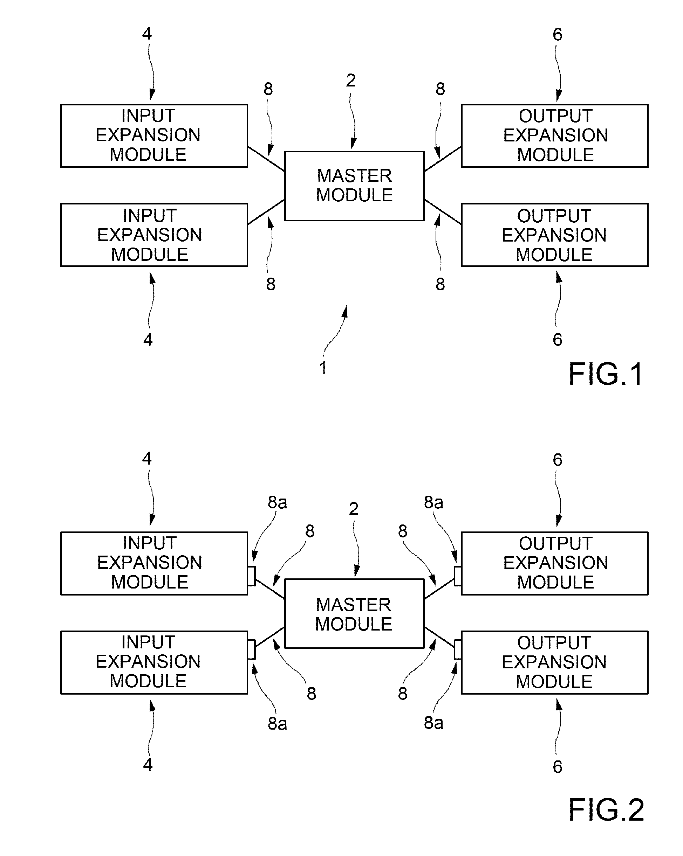

Figure 1 is a block diagram of a safety system 1 for installations and mechanical equipment according to the prior art described above.

There is a master module 2 of the AD type, connected to two input expansion modules 4 of the BC type and two output expansion modules 6 of the EX type. Said modules AD, BC and EX are interconnected by connecting elements 8.

In the prior art described here, dedicated connectors or fieldbuses may be used as connecting elements 8 for interconnecting said modules 2, 4 and 8.

If dedicated connectors are used, the modules 2, 4 and 6 must be placed close to each other to form "stacks", so that they can be fitted together, since the dedicated connectors are integral with the bodies of the modules 2, 4 and 6. This requires the availability of a space, close to the equipment to be controlled, dedicated to housing all the safety modules.

On the other hand, if a fieldbus is used, this has the disadvantage that special cables and dedicated connectors for these cables have to be obtained, resulting in a device which is both dedicated and expensive, since licence fees often have to be paid to the holders of patents associated with these products.

The problems associated with these types of connecting elements 8 therefore mainly arise from the fact that a user wishing to expand a safety system which he already owns must buy expensive special-purpose components (such as cables with dedicated connectors), which, furthermore, are not interchangeable between two different safety systems, because their nature is dependent on the specific characteristics of the safety modules used in each safety system.

The object of the present invention is therefore to provide a safety system for mechanical equipment in which the individual modules can be interconnected in a simple and rapid way and are also easily connected even at considerable distances from one another.

This and other objects are achieved according to the present invention by means of a safety system for mechanical equipment according to Claim 1.

Specific advantageous embodiments of the present invention are described in the dependent claims.

Other characteristics and advantages of the present invention will become clear from the following detailed description which is given purely by way of non-limiting example, with particular reference to the attached drawings, in which:
- Figure 1 is a block diagram of a safety system according to the prior art described above.
- Figure 2 is a block diagram of a safety system according to the present invention.

Figure 2 shows a safety system according to the present invention in which elements similar to those of Figure 1 have been given the same references.

In particular, it can be seen in Figure 2 that the connecting elements 8 comprise a single wire having an industrial terminal connector 8a (also called a "general purpose" connector) at its end. In a variant of the invention, each connecting element 8 has two industrial terminal connectors 8a at its ends.

The term "industrial terminal connector" denotes a connector of the screw or spring-loaded terminal block type, fixed or removable, for the wiring of electrical equipment or switchboards.

Therefore this connector 8a is not a dedicated connector but is a standard device which can easily be procured at low cost. Furthermore, the fact that the connecting element 8 has a single wire (for transmitting the alarm signal or the output signal), instead of a dedicated or special fieldbus, allows the input expansion modules 4 and the output expansion modules 6 to be arranged at a distance from one another, since they can be readily connected to the master module 2 in a simple and rapid way, by simply using a cable having a universal connector 8a.

The safety system according to the present invention can be considered to be a "single wire" system, because only one wire is used for transmitting a signal from the input expansion module 4 to the master module 2 and from the latter to the output expansion modules 6.

The safety system according to the present invention therefore comprises a plurality of electronic safety modules (the master module 2, the input expansion modules 4 and the output expansion modules 6, preferably known modules of the AD, BC and EX types), designed to manage machinery, robots or automation systems in a known way, by interrupting their operation completely or partially (by acting only on certain parts of this mechanical equipment) in the presence of potentially hazardous events, for example an approach to machinery to be monitored (for example, by the opening of an access door to the room in which the machinery is kept), the unauthorized access of persons to the room containing the machinery, an approach to hazardous parts of the machinery, or the like.

To monitor the occurrence of these events, use is made, in a known way, of various types of sensors not shown in the figure (such as electromechanical or magnetic sensors, safety barriers, etc.) associated with the equipment to be monitored, which are connected to the input expansion modules 4 to enable alarm signals to be sent to the master module 2. In turn, the master module 2 sends the output signals to the mechanical equipment or to the output expansion modules 6.

The safety modules 2, 4 and 6 are then interconnected to form a safety system, by means of a single signal wire (one wire for each pair of interconnected safety modules) provided with standard connectors 8a (of a known type).

The main advantages of this invention lie in the fact that safety systems can be produced in a simple, rapid and economical way by using commercially available devices which can be obtained at low cost, in which the safety system can be adapted to the environments in which it is to be fitted, allowing, for example, the remote positioning of various safety modules.

Naturally, the principle of the invention remaining the same, the forms of embodiment and details of construction may be varied widely with respect to those described and illustrated, which have been given purely by way of non-limiting example, without thereby departing from the scope of protection of the present invention as defined by the attached claims.

## Claims

1. Safety system comprising a plurality of safety modules (2, 4, 6) interconnected by means of connecting elements (8), **characterized in that** said connecting elements (8) comprise a single wire, arranged to transmit a signal between pairs of interconnected safety modules (2, 4, 6), provided with at least one connector (8a) at one of its ends.

2. System according to Claim 1, wherein said connector (8a) is an industrial terminal connector.

3. System according to Claim 1 or 2, wherein said signal is an alarm signal sent from at least one sensor associated with equipment to be monitored and representative of an approach to said equipment.

4. System according to any of the preceding claims, wherein said signal is an output signal directed towards equipment to be monitored in order to control or interrupt its operation.
